# EUROPÄISCHE PATENTSCHRIFT

(11) **EP 0 624 030 B1**
(45) Veröffentlichungstag und Bekanntmachung des Hinweises auf die Patenterteilung: **02.08.2000**
(21) Anmeldenummer: 94201216.2
(22) Anmeldetag: 02.05.1994
(51) Int. Cl.: H04N 5/60, H04N 5/46, H04N 5/52

(54) **Schaltungsanordnung zum Regeln der Amplitude eines Tonsignals**
Circuit for controlling the amplitude of a sound signal
Circuit de commande de l'amplitude d'un signal de son

(30) Priorität: 05.05.1993 DE 4314767
(43) Veröffentlichungstag der Anmeldung: 09.11.1994
(73) Patentinhaber: Philips Corporate Intellectual Property GmbH, 52064 Aachen (DE); Koninklijke Philips Electronics N.V., 5621 BA Eindhoven (NL)
(72) Erfinder: Brilka, Joachim, c/o Philips Patentverwaltung GmbH, D-20097 Hamburg (DE); Weltersbach, Wolfgang, c/o Philips, D-20097 Hamburg (DE)
(74) Vertreter: Peters, Carl Heinrich, Dipl.-Ing.

(56) Entgegenhaltungen:
- EP-A- 0 491 423
- DE-A- 3 618 873
- GB-A- 2 188 501
- US-A- 4 237 490
- IEEE TRANSACTIONS ON CONSUMER ELECTRONICS, Bd.32, Nr.3, 30. August 1986, NEW YORK US Seiten 169 - 180 ZUFFADA M. ET AL 'SINGLE-CHIP MULTISTANDARD SOUND AND VIDEO IF DEMODULATOR'
- PATENT ABSTRACTS OF JAPAN vol. 6, no. 147 (E-123) 6. August 1982 & JP-A-57 069 982 (SANYO ELECTRIC CO LTD) 30. April 1982

## Beschreibung

Die Erfindung bezieht sich auf eine Schaltungsanordnung zum Regeln der Amplitude einer zwischenfrequenten Trägerschwingung, die mit einem Tonsignal moduliert ist (Ton-ZF-Signal), gemäß dem Oberbegriff des Hauptanspruchs.

Schaltungsanordnungen zum Regeln der Amplitude sind als automatische Verstärkungsregelungen im Bereich der Video- und der Audiotechnik bekannt. Zur klirrarmen Verarbeitung und Demodulation des auf eine zwischenfrequente Trägerschwingung in Amplitudenmodulation aufmodulierten Tonsignals in einem Fernsehsignal in der L- bzw. der L'-Übertragungsnorm wird dabei eine relativ große Regelzeitkonstante von z.B. etwa 1 s benötigt. Dadurch ist die derart aufgebaute, automatische Verstärkungsregelung hinreichend stabil gegen Störungen und Verzerrungen. Bei einem Umschalten der Empfangseinrichtung, innerhalb der eine solche Verstärkungsregelung eingesetzt ist, beispielsweise eines Fernsehgerätes, von einem Übertragungskanal auf einen anderen kann durch eine solche Auslegung der Schaltungsanordnung jedoch eine längere Zeit vergehen, bis die automatische Verstärkungsregelung wieder eingeschwungen ist und sich damit die Tonwiedergabe auf einen stabilen Wert eingependelt hat. Es hat sich gezeigt, daß bei einer solchen Schaltung mit der genannten Dimensionierung der Regelzeitkonstanten etwa 2 bis 3 s vergehen, bis nach einem Kanalwechsel der Ton die normale Lautstärke wieder erreicht. Wird eine solche Schaltungsanordnung daher für die Verarbeitung des Tonsignals in einem Fernsehsignal verwendet, zeigt ein dafür eingerichtetes Fernsehempfangsgerät bei einem Kanalwechsel sehr schnell, vorzugsweise in weniger als 100 ms, das Bildsignal des neu eingeschalteten Kanals, wohingegen die Tonwiedergabe erst nach den genannten 2 bis 3 s stabil ist.

Die GB-A-2 188 501 zeigt eine automatische Verstärkungsregelschaltung in einem System zur Verarbeitung von Video- und Audiosignalen vorzugsweise von verschlüsselten Fernsebsignalen mit unterdrückten Synchronimpulsen. Dabei werden die Synchronimpulse in einem Dekoder regeneriert und zusammen mit dem Videosignal einer Weiterverarbeitung zugeführt. Die gezeigte automatische Verstärkungsregelung umfaßt eine Regelschleife, in der aus dem zusammengesetzten Videosignal im Basisband vor der Aufbereitung und Regenerierung des Synchronsignals ein Verstärkungsregelsignal abgeleitet wird. Dieses Verstärkungsregelsignal wird überlagert durch ein Verstärkungssteuersignal, welches in einem Dekoder-Interface-Netzwerk aus dem Videosignal mit regeneriertem Synchronsignal abgeleitet wird.

Die aus der GB-A-2 188 501 bekannte Schaltung enthält ein Filternetzwerk zum Filtern der Video-Verstärkungssteuerspannung. Dieses Filternetzwerk umfaßt eine Reihenschaltung aus einem Widerstand und einer Kapazität. Parallel zu dieser Reihenschaltung ist wahlweise ein weiterer Filterkondensator zuschaltbar, und zwar über einen elektronischen Schalter, der durch eine Gleichspannung aus einem Dekoder geschaltet wird, in welchem die Regeneration des unterdrückten Synchronimpulses erfolgt. Dadurch ist das genannte Verstärkungsregelungs-Filternetzwerk auf zwei Verstärkungsregelungs-Zeitkonstanten umschaltbar. Die längere Zeitkonstante wird zur Erreichung einer hinreichenden Betriebsstabilität benötigt, durch die normalerweise erwartete Verzögerungen bei der Signalverarbeitung kompensiert werden sollen, die im Bereich bis zu einer Millisekunde Dauer liegen. Die schnellere, d.h. niedrigere, "normale" Verstärkungsregelungs-Zeitkonstante ist als Kompromiß gewählt: Sie soll schnell genug sein, um sich den Bedingungen eines Kanalwechsels anzupassen, und soll andererseits langsam genug sein, um immun gegen Flackererscheinungen zu sein, die durch Flugzeuge hervorgerufen werden.

Gemäß der GB-A-2 188 501 wird somit die in der Verstärkungsregelschleife erzeugte Verstärkungsssteuerspannung je nach Bedarf über unterschiedlich konfigurierte RC-Tiefpaßfilter geleitet. Diese Tiefpaßfilter müssen auf Zeitkonstanten mit sehr hohen Werten dimensioniert werden, was insbesondere für den Wiedergabebetrieb eines fest eingestellten Kanals zutrifft. Daraus ergeben sich folgende wesentliche Nachteile:
- Die Bauelemente des Filternetzwerks sind aufgrund ihrer Dimensionierung außerhalb eines als integrierte Schaltung ausgebildeten Netzwerks angeordnet und bilden einen hohen schaltungstechnischen Aufwand, insbesondere auch durch ihre notwendigen, geometrischen Abmessungen;
- für die Bereitstellung zweier verschiedener Zeitkonstanten des Filternetzwerks sind bereits zwei voluminöse Kondensatoren und ein zusätzlicher, elektronischer Schalter erforderlich. Dieser Aufwand würde sich beträchtlich erhöhen, wenn weitere Werte für die Zeitkonstante wünschenswert werden, da dann jedenfalls je eine zusätzliche Filterkapazität und ein zusätzlicher elektronischer Schalter angefügt werden müßten;
- beim Übergang von einer Zeitkonstanten auf eine andere müssen gemäß GB-A-2 188 501 Kapazitäten zu- bzw. abgeschaltet werden, deren Ladezustand im Augenblick des Schaltens rein zufällig ist. Dadurch werden beim Umschalten der Zeitkonstanten Ausgleichsvorgänge ausgelöst, die nicht nur zu unerwünschten Störungen im Bild- und/oder Tonsignal führen können, sondern auch die Stabilität der Verstärkungsregelung nachteilig beeinflussen.

Demgegenüber liegt dem Gegenstand der vorliegenden Anmeldung die Aufgabe zugrunde, eine einfache und betriebssichere Regelung zu schaffen, durch die Bild- und Tonwiedergabe bei einem Kanalwechsel gleichermaßen schnell in einen stabilen Zustand gelangen, ohne daß dadurch die Übertragungsqualität des Tonsignals beeinträchtigt wird.

Diese Aufgabe wird durch den unabhängigen Patentanspruch 1 gelöst. Die daran anschließenden Ansprüche stellen vorteilhafte Weiterbildungen der erfindungsgemäßen Lehre dar.

Die erfindungsgemäße Schaltungsanordnung zum Regeln der Amplitude einer zwischenfrequenten Trägerschwingung enthält lediglich einen Speicher zum Speichern eines Einstellsignals, jedoch wenigstens eine Umladeeinrichtung zum Umladen dieses Speichers. Die bzw. jede Umladeeinrichtung weist wenigstens eine - allgemein gefaßt - Einrichtung zur Veränderung des gespeicherten Wertes des Einstellsignals auf. Diese Einrichtungen sind in einer bevorzugten Ausführungsform als Stromquellen ausgebildet, wobei der Speicher eine Kapazität umfaßt. In einer anderen Ausgestaltung der Erfindung sind die genannten Elemente in digitaler Schaltungstechnik ausgeführt. So kann der Speicher ein digitaler Speicher sein, dem durch verschiedene digitale Einrichtungen wahlweise Signale zur Erhöhung oder Verminderung des in ihm gespeicherten Wertes für das Einstellsignal zugeführt werden können. Insbesondere bei der beschriebenen Ausführung in analoger Schaltungstechik ergeben sich dadurch unmittelbar die folgenden Vorteile:
- Durch nur einen Speicher wird der Schaltungsaufwand auf ein Minimum reduziert;
- verschiedene Zeitkonstanten sind durch Anfügen einfacher Elemente möglich, die insbesondere in integrierter Schaltungstechnik ausgeführt werden können und daher nur einen sehr geringen zusätzlichen Schaltungsaufwand bilden;
- selbst bei einer beliebigen Konfiguration und Dimensionierung der Regelzeitkonstanten und allen auftretenden Betriebszuständen ist ein störungsfreies Umschalten und damit eine stabile Regelung gewährleistet.

Die erfindungsgemäße Schaltungsanordnung ermöglicht ein schnelles Ausregeln starker Abweichungen der Amplitude der zwischenfrequenten Trägerschwingung, die mit einem Tonsignal moduliert ist - dies wird im weiteren der Einfachheit halber als Ton-ZF-Signal bezeichnet - , von ihrem Sollwert, wie sie insbesondere beim Umschalten von einem Kanal auf einen anderen auftreten. Während dieses Regelvorgangs kommt es nur darauf an, möglichst schnell den Endzustand zu erreichen, wohingegen keine Anforderungen an eine etwaige Tonqualität gestellt werden. Diese werden jedoch nach dem Ausregeln durch das Zurückschalten auf die erste Regelzeitkonstante für den nach dem Ausregeln (wieder) einsetzenden Empfangsbetrieb gewährleistet.

Aber auch bei Empfangsstörungen oder sonstigen Störungen oder Unterbrechungen des Ton-ZF-Signals bewirkt die Erfindung eine Verbesserung der Übertragungsqualität.

Vorteilhaft ist es dabei, wenn die zweite Regelzeitkonstante einen geringeren Wert aufweist als die erste und wenn der vorgegebene Wertebereich des Bildsignals, in dem diese zweite Regelzeitkonstante wirksam ist, bei gegenüber dem Sollwert des Pegels des Bildsignals geringeren Werten liegt. In diesem Fall werden Abweichungen in der Amplitude des Ton-ZF-Signals insbesondere dann mit einer geringen Regelzeitkonstanten, d.h. sehr schnell ausgeregelt, wenn, wie beim Kanalwechsel auftretend, in einem kurzen Zeitintervall kein oder nur ein sehr geringes Bildsignal vorhanden ist. Bei einem solchen Kanalwechsel erscheinen dann Bild und Ton des neu angewählten Kanals vorzugsweise wenigstens nahezu gleichzeitig in der gewünschten Amplitude, d.h. Übertragungsqualität.

Die Vorrichtung, durch die das Regeln mit der ersten oder zweiten Regelzeitkonstanten bewirkt wird, kann nach einer weiteren Ausgestaltung der Erfindung auf wenigstens eine weitere Regelzeitkonstante umsteuerbar sein. Dadurch können gegebenenfalls für weitere Betriebszustände möglichst günstige Regelverhalten geschaffen werden.

Die Umsteuerbarkeit auf weitere Regelzeitkonstanten ist insbesondere dann von Vorteil, wenn wenigstens die erste oder zweite Regelzeitkonstante wirksam ist, wenn das Fernsehsignal nach einer ersten Übertragungsnorm ausgebildet ist, und wenn wenigstens eine der weiteren Zeitkonstanten wirksam ist, wenn das Fernsehsignal nach einer anderen Übertragungsnorm ausgebildet ist. Die erfindungsgemäße Schaltungsanordnung ist damit einfach und mit geringem Schaltungsaufwand auch für den Einsatz in Anordnungen zur Verarbeitung von Fernsehsignalen einsetzbar, die auf unterschiedliche Übertragungsnormen einstellbar sind. Derartige Schaltungsanordnungen können damit auch in diesem Teil einfach, betriebssicher und kostengünstig erstellt werden.

Eine vorteilhafte Weiterbildung der Erfindung ist gekennzeichnet durch eine Detektionseinrichtung, durch die das Überschreiten eines Übersteuerungs-Schwellenwertes durch die Amplitude des Ton-ZF-Signals detektierbar ist und durch die die Vorrichtung derart umsteuerbar ist, daß das Regeln mit einer anderen der weiteren Regelzeitkonstanten ausgeführt wird. Die erfindungsgemäße Schaltungsanordnung kann somit in einfacher Weise auch unempfindlich gegen ein Übersteuern der Amplitude des Tonsignals ausgestaltet werden. Dadurch lassen sich lästige Umschaltgeräusche beispielsweise beim Kanalwechsel vermeiden.

Eine Vorteil der Erfindung ergibt sich dadurch, daß die Vorrichtung, durch die das Regeln mit einer der Regelzeitkonstanten bewirkt wird, einen Speicher zum Speichern eines Einstellsignals für eine Einrichtung zum Einstellen der Amplitude der zwischenfrequenten Trägerschwingung bzw. des Ton-ZF-Signals sowie wenigstens eine Umladeeinrichtung aufweist, durch die der Speicher gemäß einer der Regelzeitkonstanten umladbar ist. Eine derartig ausgebildete Schaltungsanordnung arbeitet im ausgeregelten Betriebszustand mit einem konstanten, im Speicher gespeicherten Einstellsignal und damit mit einer auf einen konstanten Wert eingestellten Amplitude des Ton-ZF-Signals. Diese Einstellung kann durch Umladen des Speichers verändert werden, wobei die Art und Geschwindigkeit der Veränderung, d.h. die Richtung und die Schnelligkeit des Regelvorgangs, von der Richtung der Umladung und ihrer Geschwindigkeit abhängt, die durch die Umladeeinrichtung vorgegeben werden kann. Die Geschwindigkeit dieser Umladung ergibt die ausgewählte Regelzeitkonstante. Bei einer derart ausgebildeten Schaltungsanordnung kann der Speicher bevorzugt eine Kapazität umfassen und kann die Umladeeinrichtung wenigstens eine umsteuerbare Stromquelle aufweisen, wodurch sich eine einfache und betriebssichere, analoge Regelung ergibt.

Weitere vorteilhafte Ausgestaltungen der Erfindung sind in den übrigen Unteransprüchen beschrieben.

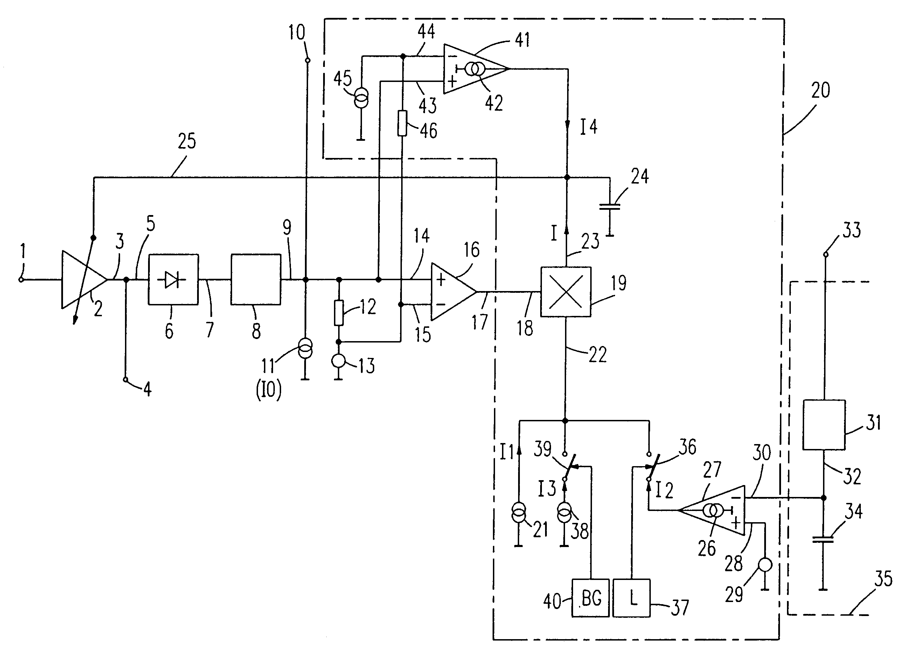

Ein Ausführungsbeispiel der Erfindung ist blockschematisch in der Figur dargestellt und wird im nachfolgenden näher beschrieben.

Bei der in der Figur dargestellten Schaltungsanordnung wird ein auf eine zwischenfrequente Trägerschwingung aufmoduliertes Tonsignal über einen Eingang 1 einem Verstärker 2 mit einstellbarer Verstärkung zugeführt. Vom Ausgang 3 des Verstärkers 2 gelangt das im Verstärker 2 auf eine gewünschte Amplitude eingestellte Ton-ZF-Signal einerseits an einen Ton-ZF-Ausgang 4 zur weiteren Verarbeitung und nachfolgend beispielsweise Wiedergabe in einer Tonwiedergabeeinrichtung und andererseits an den Eingang 5 eines Amplitudendemodulators 6. Im Amplitudendemodulator 6 wird das auf die zwischenfrequente Trägerschwingung aufmodulierte Tonsignal demoduliert und am Ausgang 7 als niederfrequentes Tonsignal, d.h. als Tonsignal im Basisband, abgegeben. Vorzugsweise liefert der Amplitudendemodulator 6 an seinem Ausgang 7 eine dem niederfrequenten Tonsignal und der Amplitude der zwischenfrequenten Trägerschwingung entsprechende Spannung. Diese wird in einem nachgeschalteten Spannungs-Strom-Konverter 8 in einen Tonsignalstrom und einen Gleichstrom umgewandelt, welche am Ausgang 9 des Spannungs-Strom-Konverters 8 von diesem abgegeben werden.

Der Ausgang 9 ist mit einem Anschluß einer an Masse führenden Stromquelle 11 verbunden, die einen Arbeitspunktstrom I0 vom Ausgang 9 gegen Masse leitet. Weiterhin mit dem Ausgang 9 verbunden ist die Reihenschaltung eines Eingangswiderstandes 12 und einer Referenzspannungsquelle 13, die andererseits ebenfalls gegen Masse geschaltet ist. Die Referenzspannungsquelle 13 liefert vorzugsweise eine der halben Versorgungsspannung der Schaltungsanordnung entsprechende Spannung. Am Eingangswiderstand 12 entsteht eine dem Tonsignalstrom und dem die Amplitude der zwischenfrequenten Trägerschwingung repräsentierenden Gleichstrom am Ausgang 9 entsprechende, also das Tonsignal im Basisband sowie die Amplitude der zwischenfrequenten Trägerschwingung repräsentierende Spannung. Diese wird zwei Eingangsanschlüssen 14, 15 eines Regelverstärkers 16 zugeführt. Dieser ist bevorzugt als Differenzverstärkerstufe ausgeführt, deren invertierender Eingang den Eingangsanschluß 15 bildet und von der Referenzspannungsquelle 13 mit der Referenzspannung versorgt wird. Der andere Eingangsanschluß 14 des Regelverstärkers 16 wird durch den nichtinvertierenden Eingang der Differenzverstärkerstufe gebildet.

Der Ausgang 9 ist außerdem mit einem Anschluß 10 verbunden, über den der Schaltungsanordnung ein niederfrequentes Tonsignal bzw. Tonsignal im Basisband vorzugsweise ohne Strombelastung des Ausgangs 9 durch den Anschluß 10 entnommen und ebenfalls einer Weiterverarbeitung, beispielsweise einer Wiedergabe in einer Tonwiedergabeeinrichtung, zugeführt werden kann.

Am Ausgang 17 des Regelverstärkers 16 wird von diesem ein aus dem demodulierten Tonsignal vom Ausgang 7 des Amplitudendemodulators 6 über den Spannungs-Strom-Konverter 8 und den Regelverstärker 16 abgeleitetes Multiplikatorsignal abgegeben. Dieses Multiplikatorsignal nimmt den Wert Null an, wenn die Amplitude des Ton-ZF-Signals auf ihren durch den Arbeitspunktstrom I0 vorgegebenen Sollwert ausgeregelt ist, und nimmt positive bzw. negative Werte an, wenn die Amplitude entsprechend zu höheren oder niedrigeren Werten geregelt werden soll.

Das Multiplikatorsignal vom Ausgang 17 des Regelverstärkers 16 wird einem Multiplikatorsignaleingang 18 einer Multiplizierstufe 19 zugeführt. Die Multiplizierstufe 19 ist Teil einer Vorrichtung 20, durch die das Regeln der Amplitude des Ton-ZF-Signals mit einer auswählbaren Regelzeitkonstanten bewirkt werden kann. Die Baugruppen, die im Ausführungsbeispiel nach der Figur von dieser Vorrichtung umfaßt werden, sind mit einer strichpunktierten Linie eingegrenzt.

Zum Regeln der Amplitude des Ton-ZF-Signals mit der ersten Regelzeitkonstanten im eingeschwungenen Betrieb des Empfangs eines vorgegebenen Kanals mit einem Fernsehsignal nach der Übertragungsnorm L oder L' umfaßt die Vorrichtung 20 eine erste Stromquelle 21, die einen ersten Strom I1 abgibt. Entsprechend des gewünschten großen Wertes für die erste Regelzeitkonstante weist der erste Strom I1 einen niedrigen Wert auf.

Der erste Strom I1 wird von der ersten Stromquelle 21 einem Stromeingang 22 der Multiplizierstufe 19 zugeführt. In der Multiplizierstufe 19 wird der erste Strom I1 mit dem Multiplikatorsignal vom Multiplikatorsignaleingang 18 multipliziert und dadurch ein Umladestrom I gebildet, der von der Multiplizierstufe 19 an einem Umladestromausgang 23 abgegeben und einem Speicherkondensator 24 zugeführt wird. Der Speicherkondensator 24 bildet den Speicher zum Speichern des Einstellsignals für den Verstärker 2 mit einstellbarer Verstärkung. Dieses Einstellsignal wird dem Verstärker 2 vom Speicherkondensator 24 über eine Leitung 25 zugeführt.

Zum Regeln der Amplitude des am Eingang 1 zugeführten Ton-ZF-Signals mit einer zweiten Regelzeitkonstanten kann am Stromeingang 22 zusätzlich zu dem ersten Strom I1 ein zweiter Strom I2 zugeführt werden, so daß als Umladestrom I nun die Summe des ersten und des zweiten Stromes I1+I2, multipliziert mit dem Multiplikatorssignal, benutzt wird. Der zweite Strom I2 ist vorzugsweise groß gegenüber dem ersten Strom I1, so daß eine entsprechend schnellere Umladung des Speicherkondensators 24 erfolgt, wie durch die zweite Regelzeitkonstante ausgedrückt wird, deren Wert gegenüber demjenigen der ersten Regelzeitkonstanten entsprechend geringer ist.

Der zweite Strom I2 wird von einer zweiten Stromquelle 26 erzeugt, die im Ausführungsbeispiel nach der Figur Teil eines Bildsignalkomparators 27 ist, dem an einem ersten Eingang 28 eine Referenzspannung von einer Referenzspannungsquelle 29 und an einem zweiten Eingang 30 ein bestimmter, auszuwertender Pegel des Bildsignals zugeführt wird. Vorzugsweise dient als dieser Pegel der Schwarzwert des Bildsignals. Dazu ist der zweite Eingang 30 des Bildsignalkomparators 27 mit dem Ausgang 32 eines Schwarzwertdetektors 31 gekoppelt, dem an einem Eingang 33 das Videosignal vom (nicht dargestellten) Videodemodulator zugeführt wird. Der Schwarzwertdetektor 31 ermittelt in an sich bekannter Weise aus diesem Videosignal den Schwarzwert, der am Ausgang 32 abgegeben und in einem Kondensator 34 gespeichert wird, der zwischen die Verbindung vom Ausgang 32 des Schwarzwertdetektors 31 zum zweiten Eingang 30 des Bildsignalkomparators 27 und Masse geschaltet ist. Der Schwarzwertdetektor 31 und der Kondensator 34 können beispielsweise in den Bild-ZF-Stufen eines Fernsehempfangsgerätes enthalten sein, in welchem die erfindungsgemäße Schaltungsanordnung zum Einsatz kommt. Die Grenze dieser Bild-ZF-Stufen ist in der Figur durch eine gestrichelte Linie 35 symbolisiert.

Vom Bildsignalkomparator 27 wird nun der Schwarzwert am zweiten Eingang 30 mit der Referenzspannung von der Referenzspannungsquelle 29 am ersten Eingang 28 verglichen. Fällt der Schwarzwert unter die durch die Referenzspannung vorgegebene Schwelle, wird vom Bildsignalkomparator 27 die zweite Stromquelle 26 eingeschaltet. Dadurch erfolgt ein Umsteuern der Vorrichtung 20 auf die zweite Regelzeitkonstante.

Das Ausführungsbeispiel nach der Figur umfaßt weiterhin einen Schalter 36, der in die Verbindung zwischen der zweiten Stromquelle 26 und dem Stromeingang 22 eingefügt ist und über eine Übertragungsnorm-Wahleinrichtung 37 für die Übertragungsnorm L und auch L' leitend geschaltet wird, wenn diese Übertragungsnormen zur Anwendung gelangen. Dadurch ist die schnelle Ausregelung des Tonsignals mit Hilfe der zweiten Regelzeitkonstanten nur beim Betrieb für diese Übertragungsnormen wirksam. Sinngemäß können ein derartiger Schalter 36 und eine derartige Übertragungsnorm-Wahleinrichtung 37 auch für andere Übertragungsnormen oder im Zusammenhang mit einem Sendersuchlauf verwendet werden.

Für den Einsatz der erfindungsgemäßen Schaltungsanordnung beim Empfang und Verarbeiten von Tonsignalen in einer anderen Übertragungsnorm, im Beispiel nach der Figur der BG-Norm, ist für eine dann erwünschte dritte Regelzeitkonstante eine dritte Stromquelle 38 vorgesehen, die einen dritten Strom I3 liefert und über einen Schalter 39 von einer zweiten Übertragungsnorm-Wahleinrichtung 40 zuschaltbar ist.

Die Vorrichtung 20 umfaßt weiterhin eine Detektionseinrichtung, die einen Komparator 41 enthält, der mit einer vierten Stromquelle 42 ausgestattet ist, durch die ein vierter Strom I4 dem Speicherkondensator 24 zuleitbar ist. Durch den Komparator 41 und die mit ihm aufgebaute Detektionseinrichtung wird das Überschreiten eines Übersteuerungs-Schwellenwertes durch die Amplitude des Ton-ZF-Ssignals detektiert. Eine von dem vom Ausgang 9 des Spannungs-Strom-Konverters 8 abgegebenen Gleichstrom, der die Amplitude der zwischenfrequenten Trägerschwingung repräsentiert, am Eingangswiderstand 12 hervorgerufene Spannung wird dazu einem ersten, nichtinvertierenden Eingang 43 des Komparators 41 zugeleitet. Mit einem zweiten, invertierenden Eingang 44 des Komparators 41 ist eine gegen Masse geschaltete Referenzstromquelle 45 sowie ferner ein an den Eingangsanschluß 15 (invertierender Eingang) des Regelverstärkers 16 und damit die Referenzspannungsquelle 13 führender Referenzwiderstand 46 verbunden. Durch die Referenzstromquelle 45, den Referenzwiderstand 46 und die Referenzspannungsquelle 13 wird dabei der Übersteuerungs-Schwellenwert gebildet. Beim Überschreiten dieses Schwellenwertes durch die Spannung am ersten Eingang 43 des Komparators 41 wird durch diesen der vierte Strom I4 eingeschaltet und damit eine sehr rasche Umladung des Speicherkondensators 24 derart vorgenommen, daß über die Leitung 25 dem Verstärker 2 ein Einstellsignal zugeleitet wird, durch welches die Verstärkung des Verstärkers 2 sehr rasch verringert und damit die detektierte Übersteuerung ausgeregelt wird. Dadurch wird insbesondere beim Kanalwechsel auf einen Sender mit hohem Pegel das Auftreten lauter Knackgeräusche oder Übersteuerungen in durch das Tonsignal gespeisten Tonwiedergabeeinrichtungen vermieden. Bei dem gezeigten Ausführungsbeispiel wirkt die Detektionseinrichtung 41, 45, 46 für den Betrieb bei allen Übertragungsnormen in gleicher Weise.

In einem Dimensionierungsbeispiel der erfindungsgemäßen Schaltungsanordnung wurde für die Stromstärke des zweiten Stroms I2 der achtzigfache Wert der Stromstärke des ersten Stroms I1 gewählt. Der dritte Strom I3 ist auf das Zehnfache des ersten Stromes I1 und der vierte Strom I4 auf beispielsweise das Tausendfache des ersten Stromes I1 festgesetzt. Die von der Referenzspannungsquelle 13 abgegebene Referenzspannung wurde bei diesem Dimensionierungsbeispiel auf die Hälfte der Versorgungsspannung für die gesamte Schaltungsanordnung festgesetzt.

## Patentansprüche

1. Schaltungsanordnung zum Regeln der Amplitude einer zwischenfrequenten Trägerschwingung, die mit einem Tonsignal moduliert ist (Ton-ZF-Signal), aus einem weiterhin ein Bildsignal umfassenden Fernsehsignal mit einer Vorrichtung, durch die das Regeln mit einer ersten Regelzeitkonstanten bewirkt wird und die derart umsteuerbar ausgebildet ist, daß das Regeln mit einer zweiten Regelzeitkonstanten erfolgt, wenn der Pegel des Bildsignals einen Wert in einem vorgegebenen Wertebereich annimmt, wobei die zweite Regelzeitkonstante einen geringeren Wert aufweist als die erste, dadurch gekennzeichnet,
daß der vorgegebene Wertebereich des Bildsignals, in dem diese zweite Regelzeitkonstante wirksam ist, bei gegenüber dem Sollwert des Pegels des Bildsignals geringeren Werten liegt, daß die Vorrichtung, durch die das Regeln mit einer der Regelzeitkonstanten bewirkt wird, einen Speicher zum Speichern eines Einstellsignals für eine Einrichtung zum Einstellen der Amplitude des Ton-ZF-Signals sowie wenigstens eine Umladeeinrichtung aufweist, durch die der Speicher gemäß einer der Regelzeitkonstanten umladbar ist, und daß der Speicher eine Kapazität umfaßt und die Umladeeinrichtung wenigstens eine umsteuerbare Stromquelle aufweist.

2. Schaltungsanordnung nach Anspruch 1, dadurch gekennzeichnet,
daß die Vorrichtung, durch die das Regeln mit der ersten oder zweiten Regelzeitkonstanten bewirkt wird, auf wenigstens eine weitere Regelzeitkonstante umsteuerbar ist.

3. Schaltungsanordnung nach Anspruch 2, dadurch gekennzeichnet,
daß wenigstens die erste oder zweite Regelzeitkonstante wirksam ist, wenn das Fernsehsignal nach einer ersten Übertragungsnorm ausgebildet ist, und daß wenigstens eine der weiteren Zeitkonstanten wirksam ist, wenn das Fernsehsignal nach einer anderen Übertragungsnorm ausgebildet ist.

4. Schaltungsanordnung nach Anspruch 2 oder 3, gekennzeichnet durch
eine Detektionseinrichtung, durch die das Überschreiten eines Übersteuerungs-Schwellenwertes durch die Amplitude des Ton-ZF-Signals detektierbar ist und durch die die Vorrichtung derart umsteuerbar ist, daß das Regeln mit einer anderen der weiteren Regelzeitkonstanten ausgeführt wird.

5. Schaltungsanordnung nach einem der vorhergehenden Ansprüche, dadurch gekennzeichnet,
daß der Speicher zum Speichern digitaler Einsteilsignale ausgebildet ist und die Umladeeinrichtung eine Schaltung umfaßt, durch die der Wert eines im Speicher gespeicherten Einstellsignals in durch die gewählte Regelzeitkonstante bestimmten Schritten veränderbar ist.

6. Schaltungsanordnung nach einem der vorhergehenden Ansprüche, dadurch gekennzeichnet,
daß als für die Auswahl der Regelzeitkonstanten ausgewerteter Pegel des Bildsignals dessen Schwarzwert herangezogen wird.

7. Schaltungsanordnung nach einem der vorhergehenden Ansprüche, dadurch gekennzeichnet,
daß zum Umladen des Speichers wenigstens mit der ersten Regelzeitkonstanten der Strom wenigstens einer der Stromquellen mit einem aus dem demodulierten Ton-ZF-Signal abgeleiteten Multiplikatorsignal in einer Multiplizierstufe zur Bildung eines Umladestroms multipliziert wird, der dem Speicher zugeführt wird.

8. Schaltungsanordnung nach Anspruch 1,
gekennzeichnet durch
- eine Anordnung zum Demodulieren des Ton-ZF-Signals und Abgeben einer der Amplitude der zwischenfrequenten Trägerschwingung entsprechenden Gleichspannung und gegebenfalls eines niederfrequenten Tonsignals,
- eine Anordnung zum Konvertieren der Gleichspannung und gegebenenfalls des niederfrequenten Tonsignals in einen Gleichstrom und gegebenenfalls einen Tonsignalstrom,
- eine Stromquelle zum Überlagern eines Arbeitspunktstromes zu dem Gleichstrom und gegebenenfalls dem Tonsignalstrom,
- eine aus einem Widerstand und einer Referenzspannungsquelle gebildete Reihenschaltung, die mit den überlagerten Strömen beaufschlagbar ist,
- sowie einer Verstärkeranordnung zum Verstärken einer an dem Widerstand hervorgerufenen Spannung.

9. Schaltungsanordnung nach Anspruch 8 in Verbindung mit Anspruch 7, dadurch gekennzeichnet,
daß die Verstärkeranordnung das Multiplikatorsignal liefert.

## Claims

1. A circuit arrangement for controlling the amplitude of an intermediate-frequency carrier oscillation modulated with a sound signal (IF sound signal) of a television signal further comprising a picture signal by means of a device with which the control with a first control time constant is realised, and is adapted to be reversible in such a way that the control is realized with a second time constant when the level of the picture signal assumes a value in a predetermined range of values, and in which the second control time constant has a smaller value than the first, characterized in that the predetermined range of values of the picture signal in which this second control time constant is operative is at lower values as compared with the nominal value of the picture signal level, in that the device by which the control with one of the control time constants is realised comprises a storage means for storing a setting signal for a device for setting the amplitude of the IF sound signal, and at least a storage reversal device by which the storage means can be reversed in conformity with one of the control time constants, and in that the storage means comprises a capacitance and the storage reversal device comprises at least a reversible current source.

2. A circuit arrangement as claimed in claim 1, characterized in that the device, by which the control with the first or the second control time constant is realised, is reversible to at least one further control time constant.

3. A circuit arrangement as claimed in claim 2, characterized in that at least the first or the second control time constant is operative when the television signal is formed in accordance with a first transmission standard, and in that at least one of the further time constants is operative when the television signal is formed in accordance with another transmission standard.

4. A circuit arrangement as claimed in claim 2 or 3, characterized by a detection device which detects the instant when a threshold value is exceeded by the amplitude of the IF sound signal and by which the device is reversible in such a way that the control is realised with another one of the further control time constants.

5. A circuit arrangement as claimed in any one of the preceding claims, characterized in that the storage means is adapted to store digital setting signals and the storage reversal device comprises a circuit by which the value of a setting signal stored in the storage means is variable in steps which are determined by the selected control tune constant.

6. A circuit arrangement as claimed in any one of the preceding claims, characterized in that the black level of the picture signal is used as the level evaluated for selecting the control time constant.

7. A circuit arrangement as claimed in any one of the preceding claims, characterized in that, for reversing the storage means at least with the first control time constant, the current of at least one of the current sources is multiplied by a multiplier signal derived from the demodulated IF sound signal in a multiplier stage for forming a reversing current which is applied to the storage means.

8. A circuit arrangement as claimed in claim 1, characterized by
- an arrangement for demodulating the IF sound signal and for supplying a direct voltage corresponding to the amplitude of the intermediate-frequency carrier oscillation, and possibly a low-frequency sound signal,
- an arrangement for converting the direct voltage and possibly the low-frequency sound signal into a direct current and possibly into a sound signal current,
- a current source for superimposing a working point current on the direct current and possibly on the sound signal current,
- a series arrangement constituted by a resistor and a reference voltage source which can receive the superimposed currents,
- and an amplifier arrangement for amplifying a voltage produced at the resistor.

9. A circuit arrangement as claimed in claim 8 where appendant to claim 7, characterized in that the amplifier arrangement supplies the multiplier signal.

## Revendications

1. Circuit de réglage de l'amplitude d'une oscillation porteuse de fréquence intermédiaire qui est modulée avec un signal de son (signal FI de son) à partir d'un signal de télévision comprenant par ailleurs un signal d'image avec un dispositif par lequel le réglage est assuré avec une première constante de temps de réglage et qui est conçu pour pouvoir être commuté de telle sorte que le réglage soit effectué avec une deuxième constante de temps de réglage lorsque le niveau du signal d'image adopte une valeur dans la plage de valeurs préalablement déterminée, la deuxième constante de temps de réglage présentant une valeur inférieure à la première, caractérisé en ce
que la plage de valeurs préalablement déterminée du signal d'image dans laquelle cette deuxième constante de temps de réglage est active se trouve à des valeurs inférieures à la valeur de consigne du niveau du signal d'image, que le dispositif par lequel le réglage est assuré avec l'une des constantes de temps de réglage présente une mémoire en vue de l'enregistrement d'un signal de réglage pour un dispositif de réglage de l'amplitude du signal FI de son ainsi qu'au moins un dispositif de rechargement par lequel la mémoire peut être rechargée conformément à l'une des constantes de temps de réglage et que la mémoire comprend une capacité et le dispositif de rechargement présente au moins une source de courant commutable.

2. Circuit selon la revendication 1,
caractérisé en ce
que le dispositif par lequel le réglage est assuré avec les première ou deuxième constantes de temps de réglage peut être commuté sur au moins une constante de temps de réglage supplémentaire.

3. Circuit selon la revendication 2,
caractérisé en ce
qu'au moins les première ou deuxième constantes de temps de réglage sont actives lorsque le signal de télévision est conçu selon une première norme de transmission et qu'au moins une des autres constantes de temps est active lorsque le signal de télévision est conçu selon une autre norme de transmission.

4. Circuit selon l'une des revendications 2 ou 3,
caractérisé par
un détecteur par lequel le dépassement d'une valeur seuil de surrégulation peut être détecté par l'amplitude du signal FI de son et par lequel le dispositif peut être commuté de telle sorte que le réglage soit effectué avec une autre des constantes de temps de réglage supplémentaires.

5. Circuit selon l'une des revendications précédentes,
caractérisé en ce
que la mémoire est conçue en vue de l'enregistrement de signaux de réglage numériques et que le dispositif de rechargement comprend un circuit par lequel la valeur d'un signal de réglage enregistré dans la mémoire peut être dans les étapes déterminées par la constante de temps de réglage choisie.

6. Circuit selon l'une des revendications précédentes,
caractérisé en ce
que le niveau de signal d'image évalué pour la sélection des constantes de temps de réglage utilisé est sa valeur de noir.

7. Circuit selon l'une des revendications précédentes,
caractérisé en ce
qu'en vue du rechargement de la mémoire au moins avec la première constante de temps de réglage du courant, au moins une des sources de courant est multipliée par un signal de multiplicateur dérivé du signal FI de son démodulé dans un étage multiplicateur en vue de la formation d'un courant de rechargement qui est amené à la mémoire.

8. Circuit selon la revendication 1,
caractérisé par
un dispositif de démodulation du signal FI de son et de délivrance d'une tension continue correspondant à l'amplitude de l'oscillation porteuse de fréquence intermédiaire et, éventuellement, d'un signal de son de basse fréquence,
- un dispositif de conversion de la tension continue et, éventuellement, du signal de son de basse fréquence en un courant continu et, éventuellement, un courant de signal de son,
- une source de courant en vue de la superposition d'un courant de point de travail au courant continu et, éventuellement, au courant du signal de son,
- un montage en série formé d'une résistance et d'une source de tension de référence qui peut être alimenté en courants superposés ainsi
- qu'un dispositif amplificateur en vue de l'amplification d'une tension provoquée sur la résistance.

9. Circuit selon la revendication 8 combinée à la revendication 7,
caractérisé en ce
que le dispositif amplificateur délivre le signal de multiplicateur.
